(19) Europäisches Patentamt
European Patent Office
Office européen des brevets

(11) EP 4 339 215 A1

(12) EUROPEAN PATENT APPLICATION
published in accordance with Art. 153(4) EPC

(43) Date of publication:
**20.03.2024 Bulletin 2024/12**

(21) Application number: **22842324.0**

(22) Date of filing: **27.06.2022**

(51) International Patent Classification (IPC):
***C08F 220/34*** *(2006.01)* ***C08F 8/20*** *(2006.01)*

(52) Cooperative Patent Classification (CPC):
**C08F 8/20; C08F 220/34**

(86) International application number:
**PCT/KR2022/009131**

(87) International publication number:
**WO 2023/287062 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.07.2021 KR 20210093704**

(71) Applicant: **LG Chem, Ltd.**
**Yeongdeungpo-gu**
**Seoul 07336 (KR)**

(72) Inventors:
- **LEE, Ji Seok**
  **Daejeon 34122 (KR)**
- **BAEK, Leehyeon**
  **Daejeon 34122 (KR)**
- **CHOI, Hyungsam**
  **Daejeon 34122 (KR)**
- **JUNG, Seonjung**
  **Daejeon 34122 (KR)**
- **KANG, Soonhee**
  **Daejeon 34122 (KR)**
- **YUN, Haesung**
  **Daejeon 34122 (KR)**
- **HUR, Yoon Hyung**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) ANTIBACTERIAL COPOLYMER

(57) Provided is an antibacterial copolymer, more particularly, an antibacterial copolymer continuously maintaining excellent antibacterial property.



Processed by Luminess, 75001 PARIS (FR)

## Description

[Technical Field]

### Cross-reference to Related Application

The present application is based on, and claims priority from, Korean Patent Application No. 10-2021-0093704, filed on July 16, 2021, the disclosure of which is hereby incorporated by reference herein in its entirety.
The present invention relates to an antibacterial copolymer exhibiting excellent antibacterial property.

[Background Art]

Recently, with the diversification of life, improvement of living standards, and change and improvement of consciousness, interest in improving hygiene and comfort in an individual's living environment is increasing. Accordingly, studies have been conducted on microorganisms that threaten them, but many types of microorganisms exist in the daily living environment, and they are widespread in nature, causing serious problems.
In particular, microorganisms such as bacteria, fungi, etc. may inhabit various environments, such as dietary life, residential environments, clothing, industrial products, etc. However, since bacteria may cause various inflammations or food poisoning, and fungi may produce not only odors, but also various skin diseases, respiratory diseases, allergies, atopic dermatitis, etc., they are problematic. In addition, microorganisms living on the surface of electronic products and household goods may cause deterioration of product performance.
Accordingly, in order to prevent human damage caused by these microorganisms, various antibacterial substances have been developed to inhibit the growth of microorganisms or to kill microorganisms.
Specifically, antibacterial agents previously developed may be broadly divided into inorganic antibacterial agents and organic antibacterial agents. Inorganic antibacterial agents are antibacterial agents containing a metal such as silver, copper, etc., and have an advantage of maintaining the antibacterial properties even under high temperature conditions due to excellent thermal stability. However, there are problems in that they are expensive and there is a possibility of discoloration due to the metal ions contained after processing. In addition, organic antibacterial agents have advantages in that they are cheaper than inorganic antibacterial agents and exhibit excellent antibacterial effects even in a small amount. However, organic antibacterial agents have a problem in that antibacterial durability is poor because there is a possibility of leaching after being applied to products.
Moreover, although organic antibacterial agent may secure the stability of products in terms of inhibiting reproduction of microorganisms and killing microorganisms, they are toxic to cause irritation to the user's skin.
Accordingly, there is a demand for an antibacterial material that has excellent antibacterial properties while sustaining antibacterial properties and securing safety to the human body.

[Prior Art Document]

[Patent Document]

(Patent Document 0001) Korean Patent No. 10-0601393

[Disclosure]

[Technical Problem]

There is provided an antibacterial copolymer which is environmentally friendly and advantageous in terms of safety to the human body while maintaining excellent antibacterial activity.
There is also provided an antibacterial article including the antibacterial copolymer.

[Technical Solution]

To achieve the above objects, there is provided an antibacterial copolymer including

a first repeating unit represented by the following Formula 1; and a second repeating unit derived from a monomer having one or more ethylenically unsaturated groups,
wherein the first repeating unit is included in an amount of 3% by mole to 60% by mole with respect to the total number of moles of the first repeating unit and the second repeating unit:

[Formula 1]

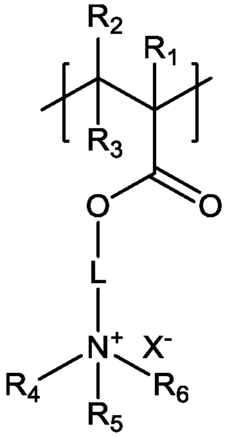

in Formula 1,
L is alkylene having 1 to 10 carbon atoms,
$R_1$ to $R_3$ are each independently hydrogen or methyl,
any one of $R_4$ to $R_6$ is alkyl having 5 to 20 carbon atoms, and the others are each independently alkyl having 1 to 4 carbon atoms, and
X is halogen.

There is also provided an antibacterial article including the above-described antibacterial copolymer.

[Effect of the Invention]

An antibacterial copolymer according to the present invention has advantages of securing safety to the human body while retaining excellent antibacterial properties.

[Best Mode for Carrying Out the Invention]

In the present invention, the terms "the first", "the second", and the like are used to describe a variety of components, and these terms are merely employed to differentiate a certain component from other components.

Further, the terms used in this description are just for explaining exemplary embodiments and it is not intended to restrict the present invention. The singular expression may include the plural expression unless it is differently expressed contextually. It must be understood that the term "include", "equip", or "have" in the present description is only used for designating the existence of characteristics taken effect, numbers, steps, components, or combinations thereof, and do not exclude the existence or the possibility of addition of one or more different characteristics, numbers, steps, components or combinations thereof beforehand.

Further, in the present invention, when a layer or an element is mentioned to be formed "on" or "above" layers or elements, it means that each layer or element is directly formed on the layers or elements, or other layers or elements may be formed between the layers, subjects, or substrates.

The present invention may be variously modified and have various forms, and specific exemplary embodiments are exemplified and explained in detail in the following description. However, it is not intended to limit the present invention to the specific exemplary embodiments and it must be understood that the present invention includes every modifications, equivalents, or replacements included in the spirit and technical scope of the present invention.

Further, the terms used in this description are just for explaining exemplary embodiments and it is not intended to restrict the present invention. The singular expression used herein may include the plural expression unless it is differently expressed contextually.

Meanwhile, as used herein, the term "(meth)acrylate" includes both acrylate and methacrylate.

In addition, in the present specification, the alkyl group may be straight or branched, and the number of carbon atoms is not particularly limited, but preferably 1 to 20. According to one embodiment, the number of carbon atoms of the alkyl group is 1 to 10. Specific examples of the alkyl group may include methyl, ethyl, propyl, n-propyl, isopropyl, butyl, n-butyl, isobutyl, tert-butyl, sec-butyl, 1-methyl-butyl, 1-ethylbutyl, pentyl, n-pentyl, isopentyl, neopentyl, tert-pentyl, 1-ethyl-propyl, 1,1-dimethylpropyl, hexyl, n-hexyl, 1-methylpentyl, 2-methylpentyl, 4-methyl-2-pentyl, 3,3-dimethylbutyl,

2-ethylbutyl, heptyl, n-heptyl, isohexyl, 1-methylhexyl, 2-methylhexyl, 3-methylhexyl, 4-methylhexyl, 5-methylhexyl, cyclopentylmethyl, cyclohexylmethyl, octyl, n-octyl, tert-octyl, 1-methylheptyl, 2-ethylhexyl, 2,4,4-trimethyl-1-pentyl, 2,4,4-trimethyl-2-pentyl, 2-propylpentyl, n-nonyl, 2,2-dimethylheptyl, etc., but are not limited thereto. Further, in the present specification, the above description of the alkyl group may also be applied to alkylene, except that the alkylene is a divalent group.

In order to bring antibacterial properties to household chemical products generally used in daily living space, such as homes, offices, multiuse facilities, etc., antibacterial agents such as metal compounds or organic compounds having an antibacterial function capable of inhibiting reproduction of microorganisms and/or killing microorganisms such as bacteria have been introduced. However, there has been a problem that the used antibacterial agents leach over time, and when the user is exposed to the leached antibacterial agent, it is apprehended that the user's health is rather threatened.

Further, there are more than 5,000 species of bacteria that have been identified. Specifically, bacteria have diverse cell morphologies such as spheres, rods, spirals, etc., and their demand for oxygen is also different from each other, and thus they are divided into aerobic bacteria, facultative bacteria, and anaerobic bacteria. Therefore, it is usually not easy for one type of antibacterial agent to have physical/chemical mechanisms whereby cell membranes/cell walls of various bacteria are damaged or proteins thereof are denatured.

Accordingly, the present inventors found that when a quaternary ammonium salt moiety having a specific structure is included not in the form of a monomer but as a repeating unit constituting the main chain in the polymer, it is possible to secure safety to the human body without concern about leaching of the antibacterial agent, and in particular, a copolymer further including a repeating unit derived from a comonomer capable of realizing different physical properties, together with the repeating unit including the quaternary ammonium salt moiety having the specific structure, may maintain the excellent antibacterial property and may be applied to a variety of fields depending on the type of the comonomer, thereby completing the present invention.

More specifically, the antibacterial copolymer may exhibit the antibacterial property against at least one of Gram-positive bacteria and Gram-negative bacteria, more specifically, all of Gram-positive bacteria and Gram-negative bacteria.

The Gram-positive bacteria collectively refer to bacteria that are stained purple when stained by the Gram staining method. The cell wall of Gram-positive bacteria consists of several layers of peptidoglycan. After staining with a basic dye such as crystal violet, even when the Gram-positive bacteria are treated with ethanol, they are not decolorized and remain colored purple. Bacteria categorized as the Gram-positive bacteria include *Enterococcus faecalis, Staphylococcus aureus, Streptococcus pneumoniae, Enterococcus faecium, Lactobacillus lactis,* etc.

Further, the Gram-negative bacteria collectively refer to bacteria that are stained red when stained by the Gram staining method, and have outer membrane consisting of lipopolysaccharides, lipoproteins, and other complex polymer materials instead of the cell wall having a relatively small amount of peptidoglycan, as compared to the Gram-positive bacteria. Thus, after staining with a basic dye such as crystal violet, even when the Gram-negative bacteria are treated with ethanol, they are decolorized, and when they are counter-stained with a red dye such as safranin, they appear red. Bacteria categorized as the Gram-negative bacteria include *Proteus mirabilis, Escherichia coli, Salmonella typhi, Pseudomonas aeruginosa, Vibrio cholerae,* etc.

Therefore, since the Gram-positive bacteria and Gram-negative bacteria may cause various diseases upon contacting, and may also cause secondary infection in critically ill patients with weak immunity, it is preferable that a single antibacterial agent is used to exhibit antibacterial properties against both Gram-positive bacteria and Gram-negative bacteria.

Meanwhile, the antibacterial copolymer according to one embodiment may include the first repeating unit represented by Formula 1, thereby exhibiting antibacterial property against at least one of Gram-positive bacteria and Gram-negative bacteria. Specifically, due to the quaternary ammonium salt moiety having the alkyl group having the specific number of carbon atoms, which constitutes the antibacterial copolymer, included in the antibacterial copolymer, ammonium cations of the quaternary ammonium salt are electrostatically adsorbed onto the cell wall of Gram-positive bacteria or Gram-negative bacteria, and then interaction with the alkyl group of the hydrophobic quaternary ammonium salt occurs, and as a result, the coating composition may exhibit antibacterial properties against the cell surface structure of the bacteria.

Hereinafter, the antibacterial copolymer and the antibacterial article will be described in more detail according to specific embodiments of the present invention.

**Antibacterial Copolymer**

The antibacterial copolymer of one embodiment includes a first repeating unit represented by the following Formula 1; and a second repeating unit derived from a monomer having one or more ethylenically unsaturated groups:

[Formula 1]

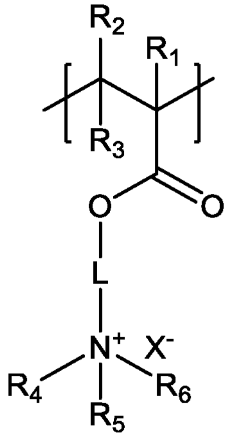

in Formula 1,

L is alkylene having 1 to 10 carbon atoms,
$R_1$ to $R_3$ are each independently hydrogen or methyl,
any one of $R_4$ to $R_6$ is alkyl having 5 to 20 carbon atoms, and the others are each independently alkyl having 1 to 4 carbon atoms, and
X is halogen.

In particular, the first repeating unit exhibiting the antibacterial property may be included in an amount of 3% by mole to 60% by mole with respect to the total number of moles of the first repeating unit and the second repeating unit in the copolymer. When the content of the first repeating unit is less than 3% by mole, it is difficult to exhibit the sufficient antibacterial effect, and when the content of the first repeating unit is more than 60% by mole, chemical stability may be reduced to generate a problem in its application.
In this regard, when the total number of the first repeating unit represented by Formula 1 in the copolymer is referred to as "n", and the total number of the second repeating unit is referred to "m", n:m may be 3:97 to 60:40.
More specifically, the first repeating unit may be included in an amount of 3% by mole or more, 5% by mole or more, 10% by mole or more, 20% by mole or more, 23.1 % by mole or more, 25% by mole or more, 30% by mole or more, and 60% by mole or less, 50% by mole or less, 40% by mole or less, 35% by mole or less, or 33.3% by mole or less with respect to the total number of moles of the first repeating unit and the second repeating unit in the copolymer.
Meanwhile, the quaternary ammonium cation included in the first repeating unit has a linker (L) linked to the main chain and three terminal groups, $R_4$, $R_5$, and $R_6$ substituents. In this regard, the linker (L) may be a linear alkylene having 1 to 10 carbon atoms. More specifically, L may be a linear alkylene having 1 to 5 carbon atoms, for example, methylene, ethylene, or propylene.
Further, one of the three terminal groups, $R_4$, $R_5$, and $R_6$ substituents substituted in the quaternary ammonium cation of the first repeating unit is an alkyl having 5 to 20 carbon atoms. More specifically one of $R_4$, $R_5$, and $R_6$ substituents is a linear, i.e., straight chain alkyl having 5 to 20 carbon atoms. In this regard, when all of $R_4$, $R_5$, and $R_6$ substituents are alkyl having less than 5 carbon atoms, there is a problem in that the antibacterial property may not be exhibited, and when any one of $R_4$, $R_5$, and $R_6$ substituents is alkyl having more than 20 carbon atoms, the starting material for preparing the copolymer is not dissolved in the solvent, and thus the synthesis itself is impossible.
Further, in Formula 1, one of $R_4$ to $R_6$ may be alkyl having 5 to 20 carbon atoms, and the others may be each independently methyl or ethyl. Preferably, $R_5$ may be alkyl having 5 to 20 carbon atoms, and $R_4$ and $R_6$ may be each independently methyl or ethyl.
More specifically, $R_1$ may be methyl, $R_2$ and $R_3$ may be hydrogen, one of $R_4$ to $R_6$ may be alkyl having 5 to 20 carbon atoms, and the others may be each independently methyl or ethyl; or
all of $R_1$ to $R_3$ may be hydrogen, one of $R_4$ to $R_6$ may be alkyl having 5 to 20 carbon atoms, and the others may be each independently methyl or ethyl.
In addition, among $R_4$, $R_5$, and $R_6$ substituents, two substituents other than alkyl having 5 to 20 carbon atoms may be the same as each other.
Preferably, in Formula 1, one of $R_4$, $R_5$, and $R_6$ may have 6 or more, 7 or more, or 8 or more carbon atoms, and 20 or less, 18 or less, 16 or less, 14 or less, or 12 or less carbon atoms. The antibacterial copolymer including the

first repeating unit represented by Formula 1 may exhibit more excellent antibacterial property.

For example, $R_1$ may be methyl, $R_2$ and $R_3$ may be hydrogen, $R_5$ may be alkyl having 6 to 16 carbon atoms, and $R_4$ and $R_6$ may be each independently methyl or ethyl. The antibacterial copolymer including the first repeating unit of this structure may exhibit excellent antibacterial property against at least one of Gram-positive bacteria and Gram-positive bacteria, more specifically, both of Gram-positive bacteria and Gram-negative bacteria.

Further, in Formula 1, X may be halogen, preferably, chloro (Cl) or bromo (Br).

Further, the repeating unit represented by Formula 1 may be represented by any one of the following Formulae 1-1 to 1-4:

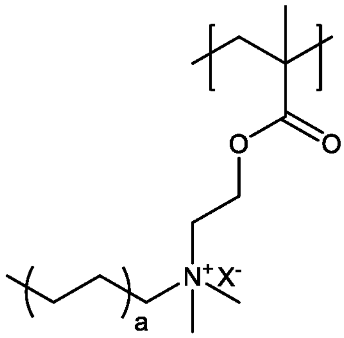

**1-1**

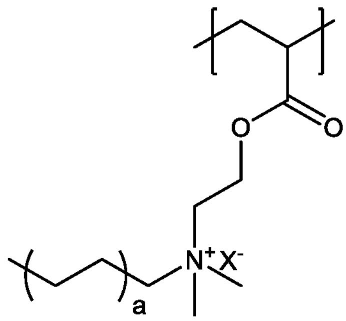

**1-2**

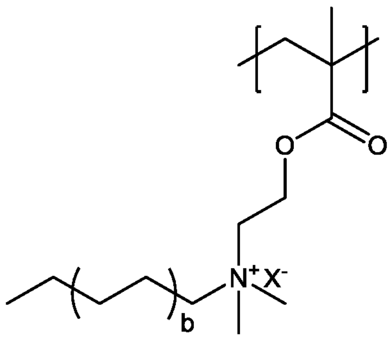

**1-3**

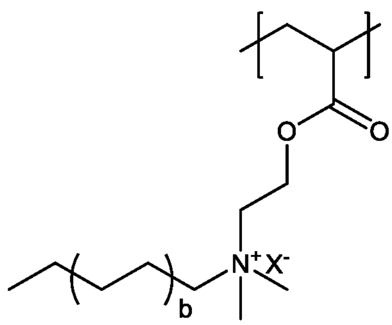

**1-4**

in Formulae 1-1 to 1-4,

a is an integer of 2 to 9,
b is an integer of 2 to 8, and
X is halogen.

More specifically, in Formulae 1-1 to 1-4, a may be 2, 3, 4, 5, 6, 7, 8, or 9, and b may be 2, 3, 4, 5, 6, 7, or 8.

In this regard, the first repeating unit represented by Formula 1 may be derived from a monomer compound represented by the following Formula 1':

[Formula 1']

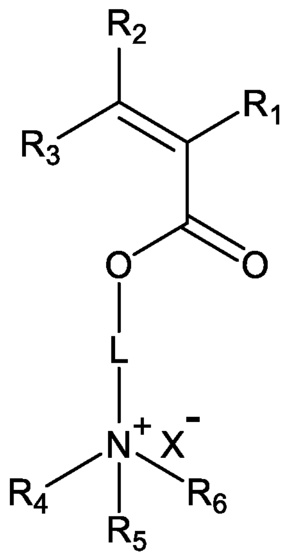

in Formula 1',

definition of each substituent is as defined in Formula 1 above.

For example, the first repeating unit is any one selected from the group consisting of:

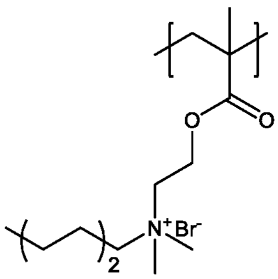
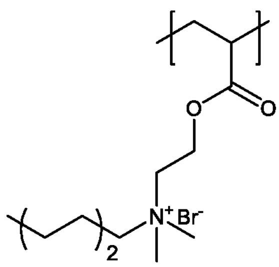
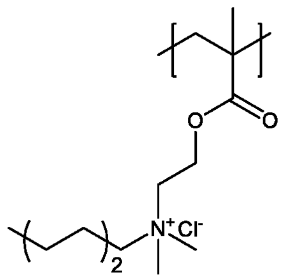
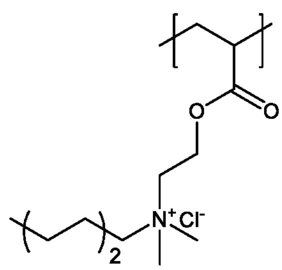
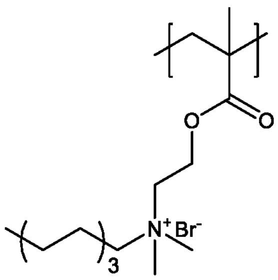
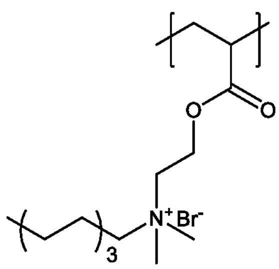
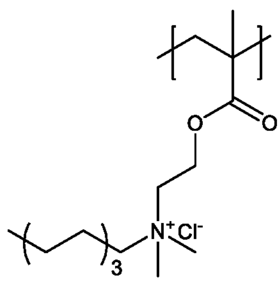
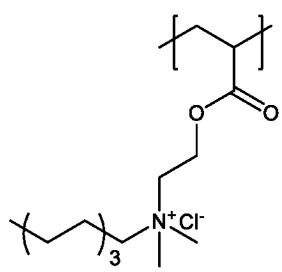
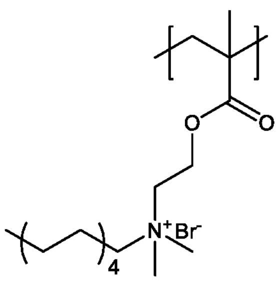
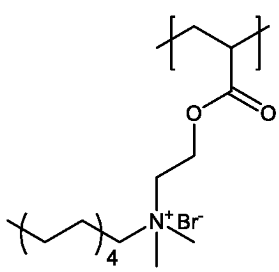
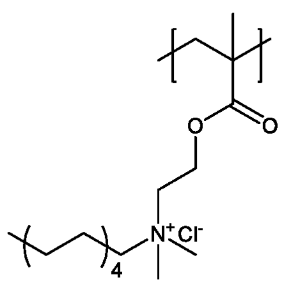
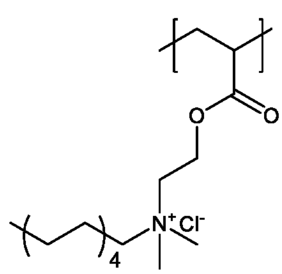

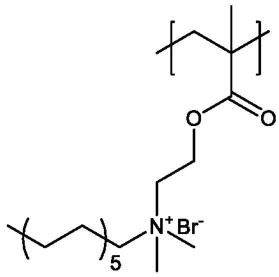
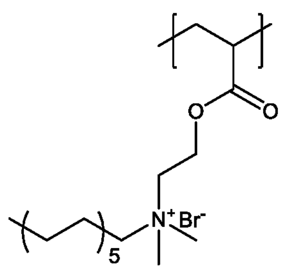
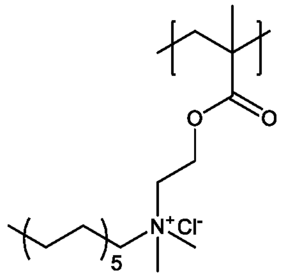
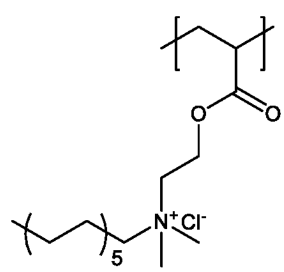

Meanwhile, the second repeating unit may be derived from a monomer having one or more ethylenically unsaturated groups to form the copolymer together with the first repeating unit. Specifically, the copolymer may be a random copolymer in which the first repeating unit and the second repeating unit are randomly arranged with each other.

In this regard, the monomer having one or more ethylenically unsaturated groups may be one or more selected from the group consisting of alkyl(meth)acrylate-based monomers, halogenated vinyl monomers, vinyl alkylate-based monomers, alkenyl cyanide monomers, and aromatic vinyl-based monomers.

The alkyl (meth)acrylate-based monomers may include methyl acrylate, ethyl acrylate, propyl acrylate, isopropyl acrylate, n-butyl acrylate, isobutyl acrylate, n-amyl acrylate, isoamyl acrylate, n-ethylhexyl acrylate, 2-ethylhexyl acrylate, methyl methacrylate, ethyl methacrylate, propyl methacrylate, isopropyl methacrylate, n-butyl methacrylate, isobutyl methacrylate, n-amyl methacrylate, isoamyl methacrylate, n-hexyl methacrylate, n-ethylhexyl methacrylate, 2-ethylhexyl methacrylate, lauryl acrylate, cetyl acrylate, stearyl acrylate, lauryl methacrylate, cetyl methacrylate, or stearyl methacrylate, preferably, methyl methacrylate.

Further, the halogenated vinyl monomers may include vinyl chloride, vinyl bromide, vinylidene chloride, or tetrafluoroethylene.

Further, the vinyl alkylate-based monomers may include vinyl alkylate ($CH_2CH-OC(O)R$, wherein R is alkyl having 1 to 10 carbon atoms) such as vinyl acetate, vinyl pyrrolidone, vinyl carbazole, or vinyl alkyl ether ($CH_2CH-OR$, wherein R is alkyl having 1 to 10 carbon atoms).

Further, the alkenyl cyanide monomers may include monomers containing both an ethylenically unsaturated group and a nitrile group in a molecule, for example, acrylonitrile, methacrylonitrile, allyl cyanide, etc.

Further, the aromatic vinyl-based monomers may include styrene, $\alpha$-methyl styrene, $\beta$-methyl styrene, p-t-butyl styrene, chlorostyrene, vinylbenzoic acid, methyl vinylbenzoate, vinyl naphthalene, chloromethyl styrene, hydroxymethyl styrene, or divinylbenzene, preferably, styrene.

More specifically, the monomer having one or more ethylenically unsaturated groups may be methyl (meth)acrylate, vinyl chloride, vinyl acetate, acrylonitrile, or styrene.

Further, the antibacterial copolymer may have a weight average molecular weight (Mw) of 10,000 g/molto 1,000,000 g/mol. When the weight average molecular weight of the antibacterial copolymer is less than 10,000 g/mol, some molecules may exist not in the form of polymers but in the form of monomers or oligomers, and thus they may easily leach. Furthermore, due to the low molecular weight, there is a problem that absorption into the body may occur. When the weight average molecular weight of the antibacterial copolymer is more than 1,000,000 g/mol, there may be a problem in processability.

More specifically, the antibacterial copolymer may have a weight average molecular weight (Mw; g/mol) of 10,000 or more, 15,000 or more, 20,000 or more, 23,000 or more, 25,000 or more, 25,636 or more, 29,376 or more, and 1,000,000 or less, 500,000 or less, 300,000 or less, 100,000 or less, 50,000 or less, 40,000 or less, 35,000 or less, or 31,246 or less.

In this regard, the weight average molecular weight (Mw) of the antibacterial copolymer may be measured by gel permeation chromatography using polystyrene (PS) as a standard for calibration. More specifically, 200 mg of the antibacterial copolymer is diluted with 200 ml of N,N-Dimethylformamide (DMF) solution to prepare about 1000 ppm of a sample, and then the weight average molecular weight may be measured using Agilent 1200 series GPC instrument at a flow rate of 1 ml/min through an RI detector. At this time, the molecular weight of the sample may be calculated, based on a calibration curve obtained using 8 kinds of PS standards.

Further, the antibacterial copolymer may exhibit excellent antibacterial effects against microorganisms, in particular, at least one of Gram-positive bacteria and Gram-negative bacteria.

More specifically, the antibacterial copolymer may exhibit the antibacterial property against one or more kinds of bacteria categorized as the Gram-positive bacteria. Alternatively, the antibacterial copolymer may exhibit the antibacterial property against one or more kinds of bacteria categorized as the Gram-negative bacteria. Alternatively, the antibacterial copolymer may exhibit the antibacterial property against one or more kinds of bacteria categorized as the Gram-negative bacteria and one or more kinds of bacteria categorized as the Gram-positive bacteria.

In this regard, the Gram-negative bacteria against which the antibacterial copolymer may exhibit the antibacterial

property may be *Proteus mirabilis,* or *Escherichia coli,* and the Gram-positive bacteria against which the antibacterial copolymer may exhibit the antibacterial property may be *Enterococcus faecalis,* or *Staphylococcus aureus,* but are not limited thereto. More preferably, the antibacterial copolymer may exhibit the antibacterial property against both of the Gram-positive bacteria and the Gram-negative bacteria. In this regard, the meaning that the antibacterial copolymer exhibits the antibacterial property means that a coating layer formed by coating the antibacterial copolymer on a substrate and then drying the same, that is, by removing the solvent from the coating composition, exhibits the antibacterial property, which may be confirmed by the inhibition rate of bacterial growth measured as 60% or more in an antibacterial property test using absorbance, as described later.

Here, *Proteus mirabilis* is a Gram-negative, rod-shaped, facultatively anaerobic or aerobic bacterium, and distributed in various environments, and may infect the respiratory tract or skin of humans and animals to cause urinary tract-related diseases. In particular, it is known that when a person is infected with the *Proteus mirabilis,* it may cause urinary tract infection or acute pyelonephritis.

Further, the antibacterial property of the antibacterial copolymer against bacteria may be evaluated in accordance with JIS Z 2801 (Measuring antibacterial activity on plastic and non-porous surfaces) or ASTM E2149 (Determining the Antimicrobial Activity of Immobilized Antimicrobial Agents Under Dynamic Contact Conditions).

Specifically, the antibacterial rate of the antibacterial copolymer, as measured in accordance with JIS Z 2801, may be 75% or more, 80% or more, 83.3% or more, 90% or more, 92.7% or more, 95% or more, 96% or more, 97% or more, 98% or more, 99% or more, or 99.9% or more, and 100% or less.

Meanwhile, the copolymer may be prepared by copolymerizing the monomer compound represented by Formula 1' and the monomer having one or more ethylenically unsaturated groups.

More specifically, the copolymerizing may be performed in the presence of a polymerization initiator. The polymerization initiator may be appropriately selected according to a polymerization method. When a thermal polymerization method is used, a thermal polymerization initiator may be used, and when a photopolymerization method is used, a photopolymerization initiator may be used. When a hybrid polymerization method (a method of using both heat and light) is used, both the thermal polymerization initiator and the photopolymerization initiator may be used. However, even though the photopolymerization method is performed, a certain amount of heat may be generated by light irradiation, such as UV irradiation or the like, and also generated with exothermic polymerization reaction. Therefore, the thermal polymerization initiator may be further used.

As the photopolymerization initiator, a compound capable of forming radicals by a light such as UV may be used without limitations in view of constitution.

Examples of the photopolymerization initiator may include one or more selected from the group consisting of benzoin ether, dialkyl acetophenone, hydroxyl alkylketone, phenyl glyoxylate, benzyl dimethyl ketal, acyl phosphine, and $\alpha$-aminoketone. Meanwhile, specific examples of acyl phosphine may include diphenyl(2,4,6-trimethylbenzoyl)phosphine oxide, phenylbis(2,4,6-trimethylbenzoyl)phosphine oxide, ethyl (2,4,6-trimethylbenzoyl)phenylphosphinate or the like. More various photopolymerization initiators are well disclosed in "UV Coatings: Basics, Recent Developments and New Application (Elsevier 2007)" written by Reinhold Schwalm, p115, however, they are not limited to the above described examples.

The photopolymerization initiator may be included in an amount of 0.001 part by weight to 1 part by weight with respect to the total 100 parts by weight of the monomers. When the content of the photopolymerization initiator is less than 0.001 part by weight, the polymerization rate may become low. When the content of the photopolymerization initiator is more than 1 part by weight, the molecular weight of the polymer may become low and its physical properties may not be uniform. More specifically, the photopolymerization initiator may be included in an amount of 0.005 parts by weight or more, or 0.01 part by weight or more, or 0.1 part by weight or more, and 0.5 parts by weight or less, or 0.3 parts by weight or less with respect to the total 100 parts by weight of the monomers.

Further, when the thermal polymerization initiator is used as the polymerization initiator, one or more selected from the group consisting of persulfate-based initiators, azo-based initiators, hydrogen peroxide, and ascorbic acid may be used as the thermal polymerization initiator. Specific examples of the persulfate-based initiators may include sodium persulfate ($Na_2S_2O_8$), potassium persulfate ($K_2S_2O_8$), ammonium persulfate ($(NH_4)_2S_2O_8$), etc. Examples of the azo-based initiators may include azobisisobutyronitrile, 2,2-azobis(2-amidinopropane)dihydrochloride, 2,2-azobis-(N,N-dimethylene)isobutyramidine dihydrochloride, 2-(carbamoylazo)isobutyronitrile, 2,2-azobis(2-[2-imidazolin-2-yl]propane)dihydrochloride, 4,4-azobis-(4-cyanovaleric acid), etc. More various thermal polymerization initiators are well-disclosed in 'Principle of Polymerization(Wiley, 1981)' written by Odian, p203, however, they are not limited to the above described examples.

The thermal polymerization initiator may be included in an amount of 0.001 part by weight to 3 parts by weight with respect to the total 100 parts by weight of the monomers. When the content of the thermal polymerization initiator is less than 0.001 part by weight, additional thermal polymerization rarely occurs, and thus the effect due to the addition of the thermal polymerization initiator may be insignificant, and when the content of the thermal polymerization initiator is more than 3 parts by weight, the molecular weight of the polymer may become low and its physical properties may

not be uniform. More specifically, the thermal polymerization initiator may be included in an amount of 0.005 parts by weight or more, or 0.01 part by weight or more, or 0.1 part by weight or more, and 3 parts by weight or less, 2.5 parts by weight or less, or 2.3 parts by weight or less with respect to the total 100 parts by weight of the monomers.

Further, the monomers and the polymerization initiators may be prepared in the form of a solution, in which they are dissolved in a solvent.

In this regard, as the solvent to be applicable, any solvent may be used without limitations in the constitution as long as it is able to dissolve the above components. For example, one or more selected from water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethylether, toluene, xylene, butyrolactone, carbitol, methyl cellosolve acetate, and N,N-dimethylacetamide may be used in combination.

On the other hand, such copolymerization between the monomers may be performed without particular limitation in the constitution as long as it is a commonly known method. For example, the copolymerization may be performed at a temperature of 60 °C to 100 °C, or 70 °C to 90 °C for 1 hour to 24 hours, and when the reaction is completed, the prepared polymer is extracted and dried to finally obtain the desired copolymer.

**Antibacterial Article**

Meanwhile, according to another aspect, provided is an antibacterial article including the above-described antibacterial copolymer.

The antibacterial article is not limited to its type, such as various household chemical products, medical products, automobile parts, building materials, etc., which require the antibacterial property. More specifically, the antibacterial article may be one or more selected from freshness-keeping materials, fabric products, agricultural films, various office supplies, various packaging materials, and medical supplies.

For example, packaging materials such as food packaging materials, vegetable packaging materials, grain packaging materials, fruit packaging materials, meat packaging materials, seafood packaging materials, processed food packaging materials, etc.; freshness-keeping materials such as containers for vegetables, grains, fruits, meats, aquatic products, processed foods, etc.; tray mats for foods; fabric products such as table mats, tablecloths, carpets, covers for seats, etc.; agricultural films; masks; office supplies such as tapes, adhesive tapes, masking tapes, masking films, etc.; various packaging materials such as flower packaging materials, plastic bags, easy-open packaging bags, shopping bags, standing bags, transparent packaging boxes, automatic packaging films, packaging materials for electronic parts, packaging materials for mechanical parts, etc.; medical films, medical tapes, medical supplies such as cell culture packs, etc.

Hereinafter, the actions and effects of the present invention will be described in more detail with reference to the specific exemplary examples of the present invention. However, these exemplary examples are provided only for illustrating the present invention, and the scope of the present invention is not defined thereby.

**Preparation Example A: Preparation of Antibacterial Monomer 1-1'**

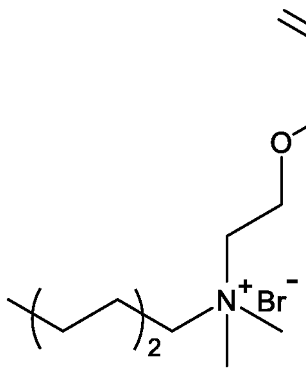

**1-1'**

In a 250 ml flask, 30 ml of acetonitrile, 0.05 mol of 2-(dimethylamino)ethyl methacrylate, 0.05 mol of 1-bromohexane (octyl bromide), and 4 mg of p-methoxyphenol were introduced. Thereafter, reaction was carried out to prepare

a quaternary ammonium salt by substituting an amino group with an alkyl group under stirring using a magnetic bar at 45°C for 24 hours. After 24 hours, the solution in which the reaction was completed was added to 200 ml of a diethyl ether solution, followed by extraction. Then, the reaction product was filtered out using a vacuum filter, and the remaining diethyl ether was completely removed to prepare an antibacterial monomer 1-1' (15 g, yield: 75%).

MS$[M+H]^+$ = 322
$^1$H NMR (500MHz, DMSO-$d_6$,$\delta$[ppm]): 6.07, 5.76($R_2$,$R_3$), 1.90($R_1$), 4.51, 3.70, 3.69(L), 3.09($R_4$,$R_6$), 1.26, 0.87($R_5$)

**Preparation Example B: Preparation of Antibacterial Monomer 1-2'**

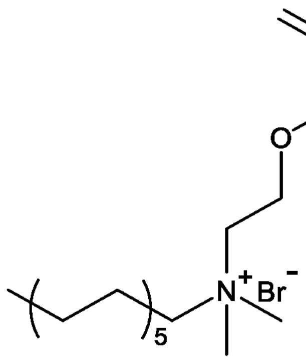

**1-2'**

An antibacterial monomer 1-2' (15 g, yield: 75%) was prepared in the same manner as in Preparation Example A, except that bromododecane was used instead of bromohexane in Preparation Example A.

MS$[M+H]^+$ = 406
$^1$H NMR (500MHz, DMSO-$d_6$,$\delta$[ppm]): 6.07, 5.76($R_2$,$R_3$), 1.90($R_1$), 4.51, 3.70, 3.69(L), 3.09($R_4$,$R_6$), 1.26, 0.87($R_5$)

**Example 1: Preparation of Copolymer 1**

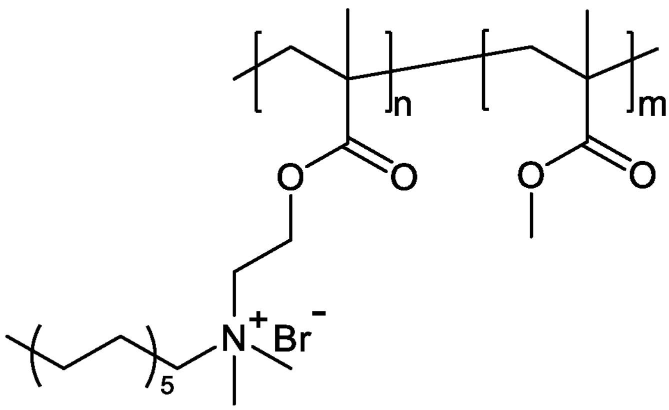

In a 250 ml flask, 370 mL of ethanol, 0.3 equivalents (121.93 g) of the antibacterial monomer 1-2' prepared in Preparation Example B, 1 equivalent (100.12 g) of methyl methacrylate, and 2% by mole (4.35 g) of azobisisobutyronitrile were introduced. Thereafter, polymerization reaction was carried out under stirring using a magnetic bar at 78°C for 8 hours. Thereafter, the solution in which the reaction was completed was cooled to room temperature, and dissolved in a sufficient amount of water. When dissolution was completed, NaCl was added in excess to extract a solid polymer, and then the reaction product was filtered out using a vacuum filter, and then ethanol and water remaining in the vacuum oven were completely removed to finally obtain Copolymer 1.

In this regard, the prepared copolymer 1 was a copolymer consisting of the above-described repeating unit, and a weight average molecular weight of the copolymer was 25,636 g/mol, n was 36, and m was 120. At this time, the weight average molecular weight of the copolymer 1 was measured using GPC (Agilent 1200 series GPC) by dissolving the polymer in DMF.

**Example 2: Preparation of Copolymer 2**

Copolymer 2 was prepared in the same manner as in Example 1, except that the antibacterial monomer 1-2' was used in an amount of 0.5 equivalents, instead of 0.3 equivalents, in Example 1. A weight average molecular weight of the prepared copolymer 2 was 31,246 g/mol, n was 54, and m was 108.

**Example 3: Preparation of Copolymer 3**

Copolymer 3 was prepared in the same manner as in Example 1, except that methyl methacrylate was used in an amount of 0.7 equivalents, instead of 1 equivalent, in Example 1. A weight average molecular weight of the prepared copolymer 3 was 29,376 g/mol, n was 48, and m was 112.

**Comparative Example 1: Preparation of Polymer PMMA**

In a 250 ml flask, 1.5 equivalents of methyl methacrylate and 2% by mole of azobisisobutyronitrile were introduced. Thereafter, polymerization reaction was carried out under stirring using a magnetic bar at 78°C for 8 hours. Thereafter, the solution in which the reaction was completed was cooled to room temperature, and dissolved in a sufficient amount of water. When dissolution was completed, NaCl was added in excess to extract a solid polymer, and then the reaction product was filtered out using a vacuum filter, and then ethanol and water remaining in the vacuum oven were completely removed to finally obtain a homopolymer PMMA.

In this regard, the prepared homopolymer PMMA had a weight average molecular weight of 19,423 g/mol, and the number of the repeating unit derived from methyl methacrylate was 194.

**Comparative Example 2: Preparation of Copolymer 4**

Copolymer 4 was prepared in the same manner as in Example 1, except that the antibacterial monomer 1-2' was used in an amount of 0.029 equivalents, instead of 0.3 equivalents, and methyl methacrylate was used in an amount of 0.971 equivalents, instead of 1 equivalent in Example 1. A weight average molecular weight of the prepared copolymer 4 was 41,368 g/mol, n was 58, and m was 1942.

**Comparative Example 3: Preparation of Copolymer 5**

Copolymer 5 was prepared in the same manner as in Example 1, except that the antibacterial monomer 1-2' was used in an amount of 0.7 equivalents, instead of 0.3 equivalents, and methyl methacrylate was used in an amount of 0.3 equivalents, instead of 1 equivalent in Example 1. A weight average molecular weight of the prepared copolymer 5 was 35,389 g/mol, n was 84, and m was 36.

**Experimental Example**

Antibacterial property was evaluated for 4 kinds of bacteria, *Proteus mirabilis* (ATCC 7002), *E. coli* (ATCC 25922), *Enterococcus faecalis* (*E. faecalis,* ATCC 29212) and *Staphylococcus aureus* (*S. aureus,* ATCC 15923) in accordance with JIS Z 2801 (Measuring antibacterial activity on plastics and non-porous surfaces) and ASTM E2149 (Determining the Antimicrobial Activity of Immobilized Antimicrobial Agents Under Dynamic Contact Conditions).

(1) Evaluation of antibacterial property in accordance with JIS Z 2801

First, the bacterial strains cultured in an incubator at 37°C for 24 hours were separated and diluted with a sterile tryptic soy broth to prepare a bacterial solution of $2.5^{-10}\times10^5$ CFU/mL, respectively.

Next, each of the copolymers prepared in Examples and Comparative Examples was dissolved in dimethyl sulfoxide (DMSO) at 5% to 20% and a spin coater was operated at 1200 rpm for 2 minutes to produce a film with a size of 5 cm × 5 cm. The film was cut into a square with a size of 5 cm × 5 cm, and used as a specimen, and the surface of the specimen was washed with 70% ethanol and sterilized with ultraviolet light for 30 minutes.

The sterilized specimen was placed on a petri dish, and 0.4 mL ($2.5^{-10}\times10^5$ CFU/mL) of the bacterial solution

was inoculated on the surface of the specimen, and then closely covered with an LDPE film with a size of 4 cm × 4 cm. The specimen on which the bacteria were applied was incubated in an incubator at 37 °C for 24 hours, and then the film and 10 mL of the tryptic soy broth nutrient medium were put in a stomacher bag and washed. 1 mL of the washed bacterial solution was taken, and 100-fold diluted. 1 mL of the diluted solution was spread on a petri dish containing 20 ml of nutrient agar, followed by final incubation for 48 hours in the incubator at 37°C. Then, the number of bacterial colonies was counted. A value of the antibacterial activity was obtained using Equation 1 below, and the experiment was performed in triplicate. The average value thus obtained was used to calculate the antibacterial rate, which is shown in Table 1 below.

[Equation 1]

$$\text{Value of antibacterial activity (R)} = [\log(B/A)/\log(C/A)] = [\log(B/C)]$$

in Equation 1,

A is the average value of the number of viable cells on the specimen prepared using Comparative Example 1, immediately after inoculation,
B is the average value of the number of viable cells on the specimen prepared using Comparative Example 1, after 24-hour incubation, and
C is the average value of the number of viable cells on the specimens prepared using Example and Comparative Example, after 24-hour incubation.

(2) Evaluation of antibacterial property in accordance with ASTM E2149

The bacteria were brought into contact with a sample to be tested for a predetermined period of time, recovered and cultured in a medium. Then, the antibacterial rate was calculated by comparing the colony forming unit (CFU) with that of a control. Preparation methods of the medium and test group required for the antibacterial test and a detailed method of the antibacterial test are as follows.

[Preparation of medium]

With regard to a liquid medium, 8 g of NB broth and 1 L of distilled water were placed and sufficiently dissolved in a 2 L container, and then sterilized in an autoclave at (120±2)°C with a vapor pressure of 103 kPA for 20 minutes.
With regard to a solid medium, 8 g of NB broth, 25 g of agar powder, and 1 L of distilled water were placed in a 2 L container and dissolved by stirring with a spoon or heating. Since the agar powder on the wall is not dissolved even at high temperatures during the sterilization process, it was dissolved by shaking. Further, it was sterilized under the same conditions as the liquid medium. NB broth solidifies at 40 °C, and thus when the temperature was lowered to 60 °C after sterilization, each 25 mL of the solution was poured into a 90 mm diameter Petri dish and solidified.

[Culture of test group]

① A portion of the bacterial strain was inoculated into 10 mL of the liquid medium using a loop, followed by suspension culture at (37±1)°C for 18 hours to 24 hours using a shaking incubator.
② The bacterial strain cultured in the liquid medium were centrifuged at 2000 rpm for 3 minutes to separate only the bacteria from the medium, which were then diluted with 1X PBS such that an OD value (optical density) was 1 at a wavelength of 600 nm. *Proteus mirabilis* showed CFU value of about $2*10^8$ CFU/mL at OD 600 nm= 0.45, *E.coli* showed CFU value of about $2*10^8$ CFU/mL at OD 600 nm= 0.45, and *E.faecalis* showed CFU value of about $2*10^8$ CFU/mL at OD 600 nm= 0.45.

[Measurement of antibacterial rate]

① 0.5 g of the powder or liquid antibacterial sample and 25 mL of $10^5$ CFU concentration of bacteria (25 mL of 1X PBS, 250 uL of bacteria with OD 600 nm =0.45) were added to a 50 mL conical tube. As a control specimen, the

remainder (bacteria, PBS), except for the antibacterial sample, was prepared in a 50 mL conical tube.
② The prepared samples were subjected to suspension-culture at (37±1)°C for 18 hours to 24 hours using a shaking incubator.
③ After the bacterial culture was completed, the samples were diluted 1x, 10x, and 100x, and each 100 ul was inoculated on the agar solid medium, and then spread thereon using a spreader or glass beads until absorbed into the medium.
④ The solid medium was subjected to stationary culture at (37±1)°C for 24 hours to 48 hours.
⑤ The colonies on the Petri dish having 30 to 300 colonies among the 1-fold, 10-fold, and 100-fold diluted samples were counted and recorded. Then, the antibacterial rate (%) was obtained by calculating how many percent was reduced in the number of CFUs of the sample, as compared to that of the control group, according to Equation 2 below, and the average value was obtained after the experiment was performed in triplicate.

–[Equation 2]

Antibacterial rate(%) = [1- (Number of bacteria in test group/Number of bacteria in control group)] x 100

in Equation 2,

the number of bacteria in the test group represents the number of bacteria in the antibacterial test of each copolymer of Examples and Comparative Examples, and
the number of bacteria in the control group represents the number of bacteria in the antibacterial test of the copolymer of Comparative Example 1.

(3) Chemical resistance test

In order to evaluate chemical resistance of the copolymers prepared in Examples and Comparative Examples, it was examined whether white deformation of the surface of the specimen occurred and stickiness occurred when the bacterial solution was inoculated on the specimen prepared in accordance with JIS Z 2801, and whether the surface swelling of each copolymer occurred and stickiness occurred, as performed in accordance with ASTM E2149. The results are shown in Table 1 below. In this regard, the "o" mark indicates excellent chemical resistance because no deformation and no stickiness occurred, and the "X" mark indicates poor chemical resistance because deformation and stickiness occurred.

[Table 1]

| | Type of Polymer | Molar ratio of first repeating unit to second repeating unit | Antibacterial rate (%) | | | | Chemical resistance test | |
|---|---|---|---|---|---|---|---|---|
| | | | *Proteus Mirabilis* | *E. coli* | *E. faecalis* | *S. aureus* | JIS Z 2801 | ASTM E2149 |
| Example 1 | Copolymer 1 | 23.1:76.9 (0.3:1) | 99.9 | 99.9 | 83.3 | 92.7 | ○ | ○ |
| Example 2 | Copolymer 2 | 33.3:66.7 (0.5:1) | 99.9 | 99.9 | 99.9 | 99.9 | ○ | ○ |
| Example 3 | Copolymer 3 | 30:70 | 99.9 | 99.9 | 99.9 | 99.9 | ○ | ○ |
| Comparative Example 1 | PMMA | 0:100 | 0 | 0 | 0 | 0 | ○ | ○ |
| Comparative Example 2 | Copolymer 4 | 2.9:97.1 | 71.3 | 74.5 | 53.2 | 67.1 | ○ | ○ |

(continued)

| | Type of Polymer | Molar ratio of first repeating unit to second repeating unit | Antibacterial rate (%) | | | | Chemical resistance test | |
|---|---|---|---|---|---|---|---|---|
| | | | *Proteus Mirabilis* | *E. coli* | *E. faecalis* | *S. aureus* | JIS Z 2801 | ASTM E2149 |
| Comparative Example 3 | Copolymer 5 | 70:30 | 99.9 | 99.9 | 99.9 | 99.9 | X | X |

Referring to Table 1, the copolymers of Examples showed significantly improved antibacterial property against all of *Proteus mirabilis, Escherichia coli* (*E. coli*), *Enterococcus faecalis* (*E. faecalis*), and *Staphylococcus aureus* (*S. aureus,* ATCC 15923), as compared to the copolymer of Comparative Example 1 not including the first repeating unit represented by Formula 1 and Copolymer 4 of Comparative Example 2 having the excessively low content of the first repeating unit represented by Formula 1.

In addition, with regard to Copolymer 5 of Comparative Example 3 having the excessively high content of the first repeating unit represented by Formula 1, when the bacterial solution was inoculated on the specimen prepared in accordance with JIS Z 2801, the surface of the specimen was deformed white and stickiness occurred, and when performed in accordance with ASTM E2149, the polymer surface was dissolved in water, causing swelling and stickiness. Therefore, Copolymer 5 of Comparative Example 3 has poor durability and chemical resistance, and therefore, physical properties are expected to deteriorate when used, indicating that its applicability to articles is very poor. In contrast, the copolymers of Examples showed no deformation or stickiness by bacteria, indicating their excellent durability and chemical resistance.

Accordingly, it is confirmed that the antibacterial copolymers of Examples including the first repeating unit represented by Formula 1 in a specific range have excellent chemical resistance, and at the same time, exhibit improved antibacterial property against Gram-negative bacteria and Gram-positive bacteria.

## Claims

**1.** An antibacterial copolymer comprising

a first repeating unit represented by the following Formula 1; and a second repeating unit derived from a monomer having one or more ethylenically unsaturated groups,

wherein the first repeating unit is included in an amount of 3% by mole to 60% by mole with respect to the total number of moles of the first repeating unit and the second repeating unit:

[Formula 1]

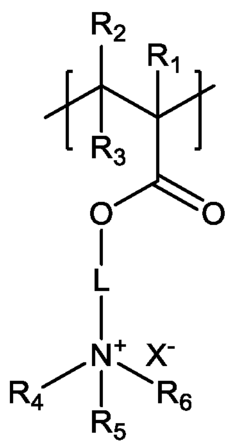

in Formula 1,

L is alkylene having 1 to 10 carbon atoms,
$R_1$ to $R_3$ are each independently hydrogen or methyl,
any one of $R_4$ to $R_6$ is alkyl having 5 to 20 carbon atoms, and the others are each independently alkyl having 1 to 4 carbon atoms, and
X is halogen.

**2.** The antibacterial copolymer of claim 1, wherein

in Formula 1,
L is methylene, ethylene, or propylene.

**3.** The antibacterial copolymer of claim 1, wherein

in Formula 1,
one of $R_4$ to $R_6$ is alkyl having 5 to 20 carbon atoms, and the others are each independently methyl or ethyl.

**4.** The antibacterial copolymer of claim 1, wherein

in Formula 1,
$R_1$ is methyl,
$R_2$ and $R_5$ are hydrogen,
one of $R_4$ to $R_6$ is alkyl having 6 to 16 carbon atoms, and the others are each independently methyl or ethyl.

**5.** The antibacterial copolymer of claim 1, wherein

the repeating unit represented by Formula 1 is represented by any one of the following Formulae 1-1 to 1-4:

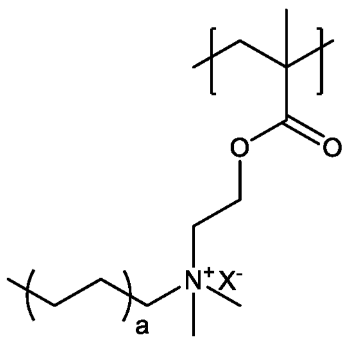

**1-1**

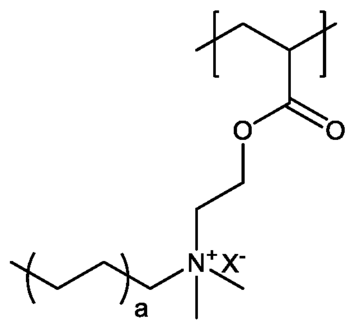

**1-2**

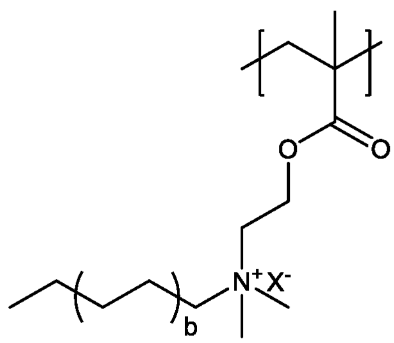

**1-3**

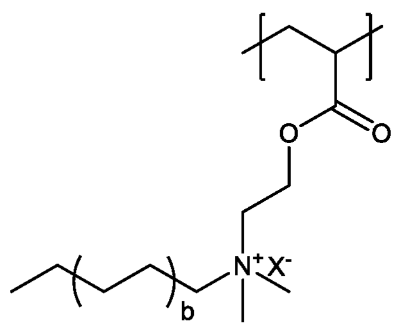

**1-4**

in Formulae 1-1 to 1-4,

a is an integer of 2 to 9,
b is an integer of 2 to 8, and
X is halogen.

6. The antibacterial copolymer of claim 1, wherein the first repeating unit is any one selected from the group consisting of:

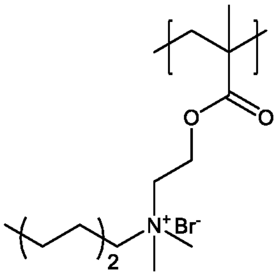
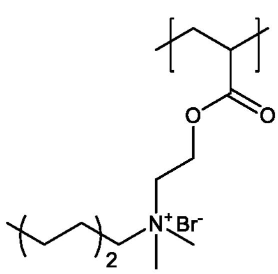
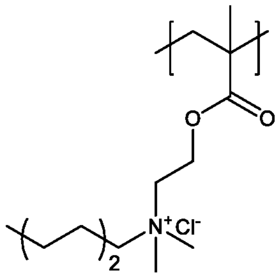
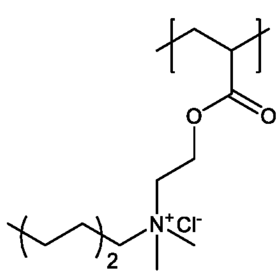
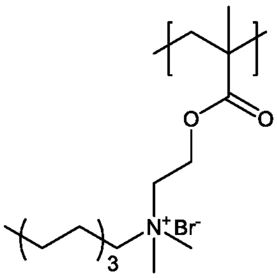
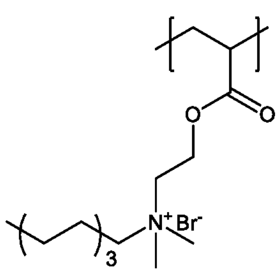
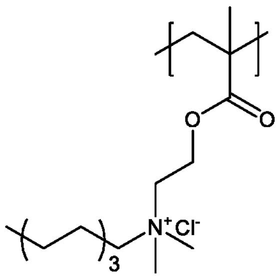
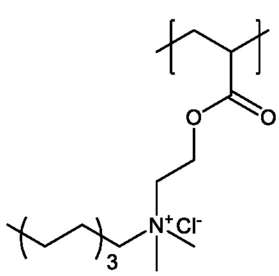
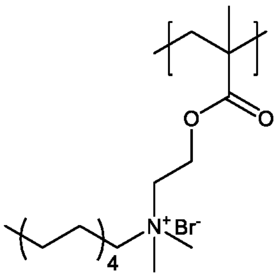
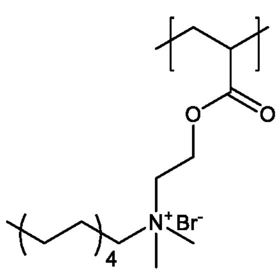
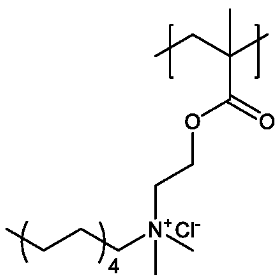
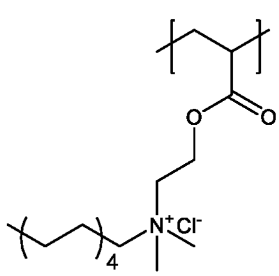
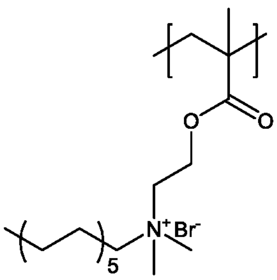
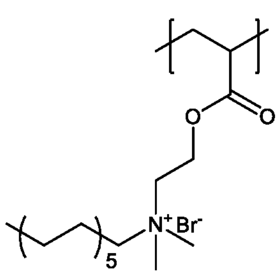
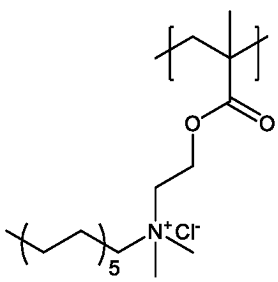
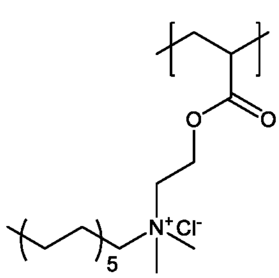

7. The antibacterial copolymer of claim 1, wherein the monomer having one or more ethylenically unsaturated groups is one or more selected from the group consisting of alkyl(meth)acrylate-based monomers, halogenated vinyl monomers, vinyl alkylate-based monomers, alkenyl cyanide monomers, and aromatic vinyl-based monomers.

8. The antibacterial copolymer of claim 7, wherein the monomer having one or more ethylenically unsaturated groups is methyl (meth)acrylate, vinyl chloride, vinyl acetate, acrylonitrile, or styrene.

9. The antibacterial copolymer of claim 1, wherein the antibacterial copolymer has a weight average molecular weight of 10,000 g/mol to 1,000,000 g/mol.

**10.** The antibacterial copolymer of claim 1, wherein
the antibacterial copolymer exhibits antibacterial property against at least one of Gram-positive bacteria and Gram-negative bacteria.

**11.** The antibacterial copolymer of claim 10, wherein

the Gram-negative bacteria is *Proteus mirabilis* or *Escherichia coli,* and
the Gram-positive bacteria is *Enterococcus faecalis* or *Staphylococcus aureus.*

**12.** The antibacterial copolymer of claim 10, wherein
the antibacterial copolymer exhibits antibacterial property against both of Gram-positive bacteria and Gram-negative bacteria.

**13.** An antibacterial article comprising the antibacterial copolymer of any one of claims 1 to 12.

**14.** The antibacterial article of claim 13, wherein
the antibacterial article is one or more selected from freshness-keeping materials, fabric products, agricultural films, various office supplies, various packaging materials, and medical supplies.

**INTERNATIONAL SEARCH REPORT**

International application No.
**PCT/KR2022/009131**

**A. CLASSIFICATION OF SUBJECT MATTER**

**C08F 220/34**(2006.01)i; **C08F 8/20**(2006.01)i

According to International Patent Classification (IPC) or to both national classification and IPC

**B. FIELDS SEARCHED**

Minimum documentation searched (classification system followed by classification symbols)

C08F 220/34(2006.01); D06M 10/08(2006.01); D06M 16/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 항균성 공중합체(antibacterial copolymer), 4차 암모늄(quaternary ammonium), 아크릴레이트(acrylate)

**C. DOCUMENTS CONSIDERED TO BE RELEVANT**

| Category* | Citation of document, with indication, where appropriate, of the relevant passages | Relevant to claim No. |
|---|---|---|
| X | WANG, C.-G. et al. Self-catalyzed living radical polymerization using quaternary-ammonium-iodide-containing monomers. Macromolecules. 2019, vol. 52, no. 5, pp. 2712-2718.<br>See abstract; pages 2712-2714 and 2716; figures 1-3; and table 1; entry 3. | 1-14 |
| X | ZHAO, J. et al. Self-stratified antimicrobial acrylic coatings via one-step UV curing. ACS applied materials & interfaces. 2015, vol. 7, no. 33, pp. 18467-18472.<br>See abstract; pages 18467-18471; and scheme 1. | 1-14 |
| X | FU, Y. et al. Robust liquid-repellent coatings based on polymer nanoparticles with excellent self-cleaning and antibacterial performances. Journal of materials chemistry A: Materials for energy and sustainability. 2017, vol. 5, no. 1, pp. 275-284.<br>See abstract; pages 275-279; and scheme 1. | 1-14 |
| X | WO 2008-082293 A1 (NEDERLANDSE ORGANISATIE VOOR TOEGEPAST-NATUURWETENSCHAPPELIJK ONDERZOEK TNO) 10 July 2008 (2008-07-10)<br>See page 11; claims 1, 10, 17 and 20-29; and table 1. | 1-14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 October 2022** | **06 October 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No.
**PCT/KR2022/009131**

**C. DOCUMENTS CONSIDERED TO BE RELEVANT**

| Category* | Citation of document, with indication, where appropriate, of the relevant passages | Relevant to claim No. |
|---|---|---|
| X | JI, W. et al. Bactericidal specificity and resistance profile of poly(quaternary ammonium) polymers and protein-poly(quaternary ammonium) conjugates. Biomacromolecules. 2017, vol. 18, no. 8, pp. 2583-2593. See abstract; pages 2585 and 2589-2590; and scheme 1. | 1-7,9-14 |

Form PCT/ISA/210 (second sheet) (July 2019)

**INTERNATIONAL SEARCH REPORT**
**Information on patent family members**

International application No.
**PCT/KR2022/009131**

| Patent document cited in search report | Publication date (day/month/year) | Patent family member(s) | Publication date (day/month/year) |
|---|---|---|---|
| WO 2008-082293 A1 | 10 July 2008 | EP 1939350 A1 | 02 July 2008 |
| | | EP 2104763 A1 | 30 September 2009 |
| | | EP 2104763 B1 | 29 March 2017 |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210093704
- KR 100601393


### Non-patent literature cited in the description


- **REINHOLD SCHWALM.** UV Coatings: Basics, Recent Developments and New Application. Elsevier, 2007, 115
- **ODIAN.** Principle of Polymerization. Wiley, 1981, 203